# EUROPÄISCHE PATENTSCHRIFT

(11) **EP 1 033 057 B1**
(45) Veröffentlichungstag und Bekanntmachung des Hinweises auf die Patenterteilung: **10.10.2007**
(21) Anmeldenummer: 98956708.6
(22) Anmeldetag: 19.11.1998
(51) Int. Cl.: H04Q 11/04

(54) **NACHRICHTENÜBERTRAGUNGSSYSTEM**
MESSAGE TRANSMISSION SYSTEM
SYSTEME DE TRANSMISSION DE MESSAGES

(30) Priorität: 19.11.1997 AT 196197
(43) Veröffentlichungstag der Anmeldung: 06.09.2000
(73) Patentinhaber: ERICSSON AUSTRIA AKTIENGESELLSCHAFT, 1120 Wien (AT)
(72) Erfinder: SJÖBERG, Per-Olof, S-125 30 Alvsjo (SE); JOHANSSON, Albin, A-1190 Wien (AT)
(74) Vertreter: Gibler, Ferdinand
(86) Internationale Anmeldenummer: PCT/AT1998/000281
(87) Internationale Veröffentlichungsnummer: WO 1999/027749

(56) Entgegenhaltungen:
- WO-A-93/06692
- WO-A-97/11534
- DE-C- 4 444 312
- US-A- 5 613 191

## Beschreibung

Die Erfindung betrifft ein Nachrichtenübertragungssystem zur gleichzeitigen Übertragung von analogen oder digitalen Basisbandsignalen, z.B. POTS, ISDN o.ä. und von Breitbandsignalen, z.B. ADSL, VDSL o.ä., über eine Zweidrahtleitung von einer zentralen Stelle, z.B. einem Wählamt, zu zumindest einem Teilnehmer, mit einer Basisband-Einheit und einer Breitband-Einheit, die über zumindest eine Gabelschaltung und zumindest ein Breitband-Filter, welches aus einem Hoch- und einem Tiefpaß gebildet ist, mit der Teilnehmerleitung verbunden sind.

Bekannte Systeme dieser Art bestehen derzeit beispielsweise in Wählämtern des öffentlichen Telephonnetzes, deren Betreiber je nach Bedarf für bestimmte Teilnehmer eine Breitbandübertragungsmöglichkeit anbieten. Aber nicht nur in Wählämtern sondern auch in mit diesen über eine Übertragungsstrecke verbundenen, abgesetzten Wählämtern kann den Teilnehmern ein Breitbanddienst zur Verfügung gestellt werden.

Breitbandverfahren wie ADSL, VDSL und xDSL o.ä. nützen das Frequenzband oberhalb des Basisbandes, das z.B. von POTS(Plain Old Telephone)- oder ISDN-Signalen belegt ist. Diese unterschiedlichen Übertragungsdienste verwenden dieselbe Teilnehmerleitung als Übertragungsmedium.

So ermöglicht das immer mehr an Bedeutung erlangende Breitbandübertragungsverfahren ADSL (Asymmetric Digital Subscriber Line) die digitale Informationsübertragung großer Datenmengen über eine Zweidraht-Teilnehmeranschlußleitung in einer Richtung von der zentralen Stelle zum Teilnehmer und die Übertragung von Steuerfunktionen in beiden Richtungen.

Die WO-A-9711534 zeigt ein Nachrichtenübertragungssystem zur gleichzeitigen Übertragung von Basisband- und digitalen Breitbandsignalen über eine Zweidrahtleitung, wobei zur Trennung von Basisband- und Breitbandsignalen jeweils ein aus einem Hochpaß-Filter und einem Tiefpaß-Filter zusammengesetztes Breitband-Filter vorgesehen ist. Die Grenzfrequenz des Tiefpaßfilters ist dabei so gewählt, daß dieser für den gesamten Frequenzbereich der Basisbandsignale durchlässig ist. Zur Vereinfachung der Installationsarbeiten beim Teilnehmer kann das Tiefpaß-Filter im Bereich des Teilnehmerendgeräts getrennt vom Hochpaß-Filter angebracht sein.

Derzeit werden bei ADSL-Nachrichtenübertragungssystemen vielfach QAM-Verfahren angewandt, z.B. DMT (Diskrete Mehrfach-Tonmodulation) oder CAP (CArrierless Phasemodulation), wobei die gebildeten Signale den analogen oder digitalen Telephonsignalen, z.B. POTS oder ISDN, frequenzmäßig überlagert werden. Sowohl auf der Amtsseite als auch teilnehmerseitig wird das auf der Teilnehmerleitung zu übertragende bzw. übertragene Signal über eigene Breitband-Filter (ADSL-Filter) zum Empfangen getrennt und zum Senden überlagert.

In der zentralen Stelle, z.B. dem Wählamt, sind die Basisband-Einheit, die Breitband-Einheit und das gemeinsame Breitband-Filter in verschiedenen baulichen Bereichen räumlich voneinander getrennt angeordnet, die unterschiedlichen Übertragungs-Einheiten wurden bisher als vollkommen getrennte Funktionsblöcke angesehen, die daher auch innerhalb des Wählamtes an teilweise weit voneinander entfernt liegenden Stellen angeordnet wurden.

Der Nachteil der bekannten Nachrichtenübertragungssysteme dieser Art besteht nun darin, daß sich aufgrund der räumlichen Trennung ein nicht unerheblicher Verkabelungsaufwand sowie ein zusätzlicher Raumbedarf durch eigene Filterbaugruppen, und eigene Gestelle für Breitband- bzw. Basisband-Einheiten ergibt. Unter Verkabelungsaufwand sind dabei nicht nur die eigentliche Rangierarbeiten innerhalb des Wählamtes zu verstehen sondern es beinhaltet dieser auch die Dokumentation darüber, wie die einzelnen, verlegten Leitungen den miteinander verbundenen Einheiten zugeordnet sind. Diese Aufzeichnungen müssen ständig an die im Laufe der Zeit vorzunehmenden Veränderungen angepaßt werden, die eine Archivierung von Daten und die Betreuung der archivierten Daten erfordern.

Von großer Bedeutung ist daher auch der sich aus jeder Verkabelung ergebende Mehraufwand an Wartung, der sich besonders in den Personalkosten bemerkbar macht. Daneben schlagen sich auch die Kosten für die einzelnen Rangierpunkte innerhalb des Wählamtes zu Buche.

Ein weiterer Nachteil wird dadurch verursacht, daß sowohl für die Breitband-Einheit als auch für die Basisband-Einheit eine eigene Rechnersteuerung vorgesehen werden muß.

Die Aufgabe der Erfindung besteht darin, ein Nachrichtenübertragungssystem der eingangs genannten Art anzugeben, mit dem eine Reduktion des erforderlichen Platzbedarfes und des Verkabelungsaufwandes, insbesondere die Rangier- und Wartungsarbeiten, in der zentralen Stelle ermöglicht wird.

Eine weitere Aufgabe besteht darin, den Instandhaltungsaufwand und die apparativen Kosten, z.B. für Rangierpunkte, des Systems und die Anzahl von Einzel-Schnittstellensteuerungen für das System zu verringern.

Eine weitere Aufgabe der Erfindung besteht darin, ein Nachrichtenübertragungssystein zu schaffen, mit dem eine Anpassung bestehender an zusätzliche neue Übertragungseinheiten auf einfache Weise vorgenommen werden kann.

Erfindungsgemäß wird dies dadurch erreicht, daß die Basisband-Einheit, die Breitband-Einheit und das zumindest eine Breitband-Filter zu einer Einheit mit einer zentralen Schnittstellen-Steuervorrichtung zusammengefaßt sind.

Auf diese Weise kann der Betrieb und die Wartung der einzelnen unterschiedlichen Einheiten zentral koordiniert werden. So ist immer bekannt, welche Art von Übertragungssystem der bestehende Teilnehmer anwendet. Wenn dieser nun z.B. eine zusätzliche ADSL-Übertragungseinheit neben seiner bereits bestehenden POTS- oder ISDN-Einheit aufrüsten möchte, kann sofort das richtige Breitband-Filter für den Teilnehmer bereitgestellt und die ADSL-Einheit richtig konfiguriert werden. Ein weiterer Vorteil besteht darin, daß das Breitband-Filter an die bereits bestehenden Eigenschaften der POTS- bzw. ISDN-Einheiten angepaßt werden kann. Es kann sogar die POTS-Konfiguration entsprechend richtig geändert werden, wenn dies durch den Anschluß eines bestimmten Breitband-Filters notwendig ist. Dies ist dadurch bedingt, daß verschiedene Telephonnetz-Betreiber bestimmte reelle bzw. komplexe Leitungsimpedanzen für ihre POTS-Teilnehmer spezifizieren, die z.B. ein aktives Breitband-Filter erfordern. Wird die POTS-Konfiguration aber auf eine rein reelle Impedanz geändert, genügt ein passives Breitband-Filter.

Die weiteren Vorteile bestehen im geringeren Wartungs- und Verkabelungsaufwand, der sich durch die Zusammenlegung der einzelnen Einheiten erzielen läßt, da dementsprechend weniger Kabelarbeiten vorgenommen und Kabel instandgehalten werden müssen. Der damit wegfallende Dokumentationsaufwand ist ein weiterer Vorteil des erfindungsgemäßen Nachrichtensystems. Durch die zentrale Schnittstellen-Steuerung kann der Mehraufwand an getrennten Steuerungen eingespart werden. Sie vereint die sonst getrennten Steuerungen in sich, es hat daher nur eine Verbindung zur zentralen Amts-Steuerung zu bestehen, während es bei der getrennten Realisierung zumindest zwei sind.

In besonders bevorzugter Weise kann gemäß einer Ausführungsform der Erfindung vorgesehen sein, daß die Basisband-Einheit, die Breitband-Einheit und das zumindest eine Breitband-Filter auf einer gemeinsamen Leiterplatte zusammengefaßt sind. Auf diese Weise lassen sich die Vorteile der Zusammenlegung von Basisband- und Breitband-Einheiten effektiv nutzen.

Eine alternative Ausgestaltung der Erfindung kann darin bestehen, daß weiters die zumindest eine Gabelschaltung in der Einheit mit der zentralen Schnittstellen-Steuervorrichtung beinhaltet bzw. auf der gemeinsamen Leiterplatte angeordnet ist.

In weiterer Ausbildung der Erfindung kann vorgesehen sein, daß der Sendeausgang und der Empfangseingang der Breitband-Einheit bzw. der Basisband-Einheit mit den teilnehmerseitigen Eingängen bzw. Ausgängen jeweils eines unidirektionalen Breitband-Filters verbunden sind, und daß der Eingang und der Ausgang der beiden unidirektionalen Breitband-Filter mit einer gemeinsamen Gabelschaltung verbunden sind.

Aufgrund der besonderen Anordnung dieser Ausführungsform rücken die beiden unidirektionalen Breitband-Filter unmittelbar an den ADSL- bzw. POTS-Eingang, was eine weitere Reduktion des technischen Aufwands und der Kosten zur Folge hat. Auf diese Weise wird die sonst erforderliche Bidirektionalität für das Breitband-Filter vermieden und es werden stattdessen zwei unidirektionale Breitband-Filter eingesetzt, die technisch mit wesentlich geringerem Aufwand und daher auch kostengünstiger aufgebaut werden können. Dazu trägt auch bei, daß die Anforderungen an die Spannungsfestigkeit dadurch geringer werden. Darüber hinaus kann jedes Breitband-Filter getrennt optimiert werden.

In weiterer Ausbildung der Erfindung kann vorgesehen sein, daß die gemeinsame Gabelschaltung, die beiden unidirektionalen Breitband-Filter, die Breitband-Einheit, die Basisband-Einheit und die zentrale Schnittstellen-Steuervorrichtung auf einer Leiterplatte zusammengefaßt sind.

Die Anordnung auf einer gemeinsamen Leiterplatte hat den unmittelbaren Vorteil, daß die auf der Teilnehmerleitung übermittelten Signale besser an die verwendeten Übertragungsarten angepaßt werden können. Die verschiedenen Übertragungsdienste unterliegen dadurch einer geringeren Beeinflussung durch Gebührenimpulse und Rufsignale.

Gemäß einer weiteren Ausführungsform der Erfindung kann vorgesehen sein, daß die der Basisband-Einheit und der Breitband-Einheit zugeordneten digitalen Signal-Prozessor-Schaltkreise zu einem zentralen digitalen Signal-Prozessor-Schaltkreis zusammengefaßt sind, wodurch sich eine erhebliche Reduktion des Bauteilaufwandes für Filterung und Kodierung in der Basisband- und der Breitband-Einheit erreichen läßt.

Gemäß einer anderen Variante der Erfindung kann vorgesehen sein, daß die der Basisband-Einheit und der Breitband-Einheit zugeordneten Analog-Digital-Wandler zu einem zentralen Analog-Digital-Wandler zusammengefaßt sind. Dies ermöglicht ebenfalls eine deutliche Reduktion der Bauteilkosten.

Gemäß einer weiteren Ausbildung der Erfindung kann vorgesehen sein, daß die Basisband-Einheit, die Breitband-Einheit und die zentrale Schnittstellen-Steuervorrichtung zumindest teilweise integriert sind. Weiters können Teile des oder der Breitband-Filter(s)integriert sein.

Dabei kann der integrierte Schaltkreis als ein Baustein oder als ein Chip-Set aus mehreren Bausteinen ausgebildet sein.

Auf diese Weise kann die Miniaturisierung der einzelnen Einheiten und damit eine weitere Platzreduktion erzielt werden. Durch die Zusammenlegung der Vorrichtungen zur Steuerung, zur Analog-Digital-Wandlung und zur Filterung für die Basisband- und die Breitband-Einheit zu jeweils einer Funktionseinheit ist auch eine erhebliche Verminderung von Energieverlusten durchführbar. Durch die Integration werden die Gesamtherstellungskosten bzw. der Verkabelungsaufwand gegenüber den herkömmlichen Lösungen weiter verringert.

Nachfolgend wird die Erfindung anhand der in den Zeichnungen dargestellten Ausführungsbeispiele eingehend erläutert. Es zeigt dabei
Fig.1 ein Blockschaltbild eines Nachrichtenübertragungssystem gemäß dem Stand der Technik;
Fig.2 ein Blockschaltbild einer Ausführungsform des erfindungsgemäßen Nachrichtenübertragungssystems;
Fig.3 ein Blockschaltbild einer weiteren Ausführungsform des erfindungsgemäßen Nachrichtenübertragungssystems;
Fig.4 einen Graph mit den auf der Übertragungsleitung eines Nachrichtenübertragungssystems auftretenden Frequenzbereichen;
Fig.5 und 6 jeweils ein Blockschaltbild einer Teilnehmerschnittstellenschaltung für eine Basis- und eine Breitband-Einheit nach dem Stand der Technik;
Fig.7 ein Nachrichtenübertragungssystem mit Breitbandübertragung gemäß dem Stand der Technik.

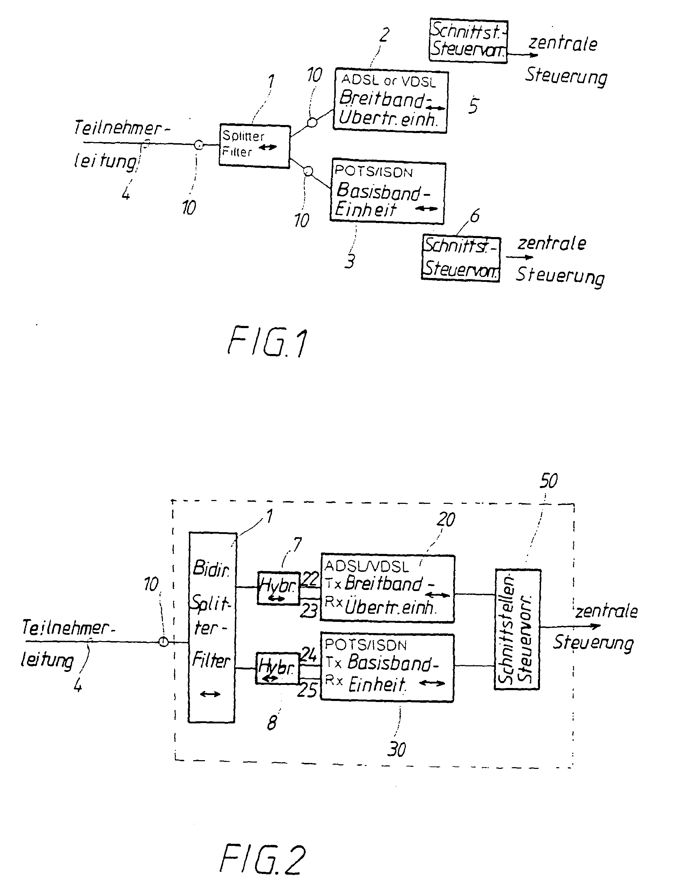

In Fig.1 ist ein Nachrichtenübertragungssystem zur gleichzeitigen Übertragung von analogen oder digitalen Basisbandsignalen, z.B. POTS, ISDN o.ä. und von Breitbandsignalen, z.B. ADSL, VDSL, xDSL, o.ä. über eine Zweidrahtleitung 4 nach dem Stand der Technik dargestellt, welches in einer zentralen Stelle, in diesem Beispiel einem Wählamt, angeordnet ist. Eine solche zentrale Stelle könnte aber auch durch eine Nebenstellenanlage, ein abgesetztes Wählamt oder eine ähnliche Einrichtung gebildet sein.

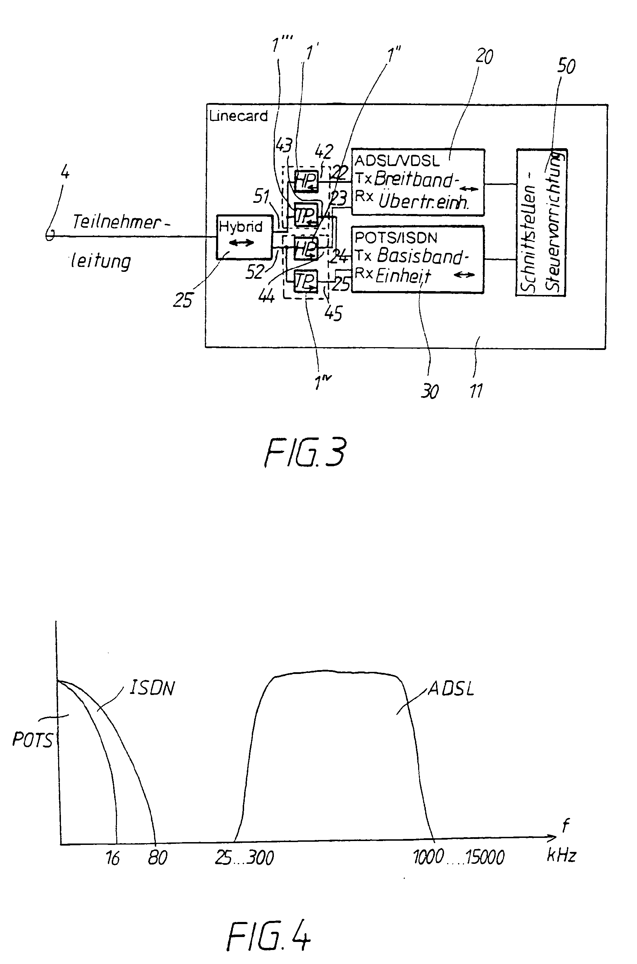

Eine Basisband-Einheit 3, über die die analogen Sprachsignale, z.B. POTS, oder die digitale Information, z.B. ISDN, des Telephonnetzes an den am anderen Ende der Teilnehmerleitung 4 verbindbaren Teilnehmer gesendet bzw. vom Teilnehmer empfangen werden, wird über eine Schnittstellen-Steuereinrichtung 6 gesteuert, die ihrerseits in Verbindung mit einer zentralen Amtssteuerung steht. Die eingezeichneten Knoten 10 sind Rangierungen im Hauptverteiler des Wählamtes, welche auf die Funktion der Datenübertragung aber keine Wirkung ausüben. Sie sind daher in Fig.3 nicht mehr eingezeichnet. Die Basisband-Einheit 3 existiert für alle Teilnehmer, die über das jeweilige Wählamt verbunden werden können. Als zusätzliche Übertragungsmöglichkeit kann jeder Teilnehmer je nach Bedarf auch eine Breitbandübertragungseinheit 2 zugeteilt bekommen, deren Funktionen über eine weitere Schnittstellen-Steuervorrichtung 5 überwacht werden.

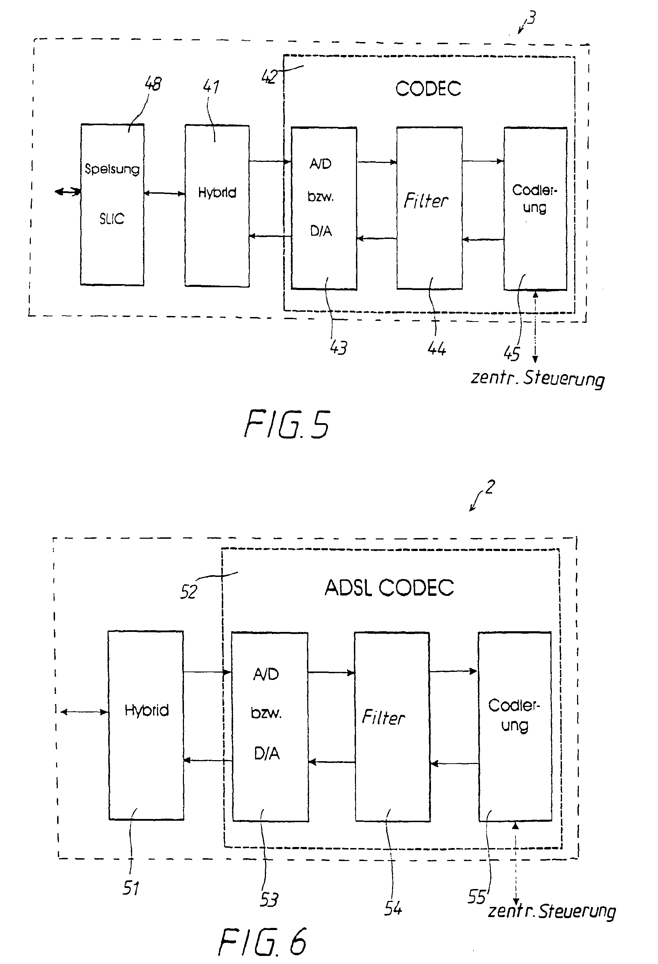

Ein Blockschaltbild des inneren Aufbaus einer Basisband-Einheit 3 ist in Fig.5 und das einer Breitband-Einheit in Fig.6 abgebildet.

Zur Trennung der Frequenzbereiche des über die Teilnehmerleitung 4 einlangenden überlagerten Signals ist ein bidirektionales Breitband-Filter 1 vorgesehen, das einerseits mit der Teilnehmerleitung 4 und andererseits mit den Ein- bzw. Ausgängen der Basisband-Einheit 3 und der Breitband-Einheit 2 verbunden ist. Die von den Einheiten 2 und 3 in der anderen Richtung gesendeten Signale werden im Breitband-Filter 1 frequenzmäßig überlagert und an den Teilnehmer übermittelt. Die dabei auftretenden Frequenzbänder der POTS-, ISDN- und ADSL-Signale sind in Fig. 4 dargestellt.

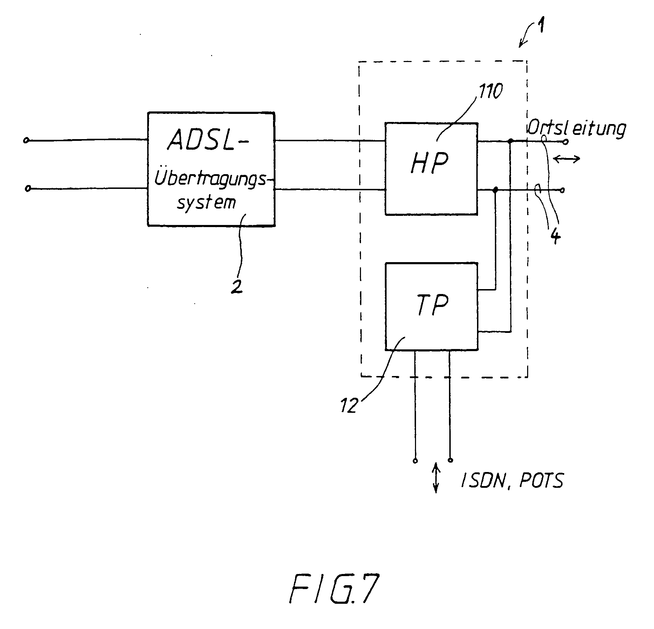

Der innere Aufbau eines Breitband-Filters 1 ist in Fig.7 dargestellt, wobei ein bidirektionales Breitbandübertragungssystem 15 über einen Hochpaß 110 und ISDN- und POTS-Einheiten über einen Tiefpaß 12 mit einer Teilnehmer- bzw. Ortsleitung 4 verbunden sind. Die Spannungsfestigkeit des Hoch- und Tiefpaßfilters 110, 12 muß für die auftretenden Ruf- und Speisespannungen ausgelegt sein.

Da die Breitband-Einheit 2 in Fig.1 einen zusätzlichen Dienst darstellt, der vom Teilnehmer auswählbar ist, ist diese im Wählamt an einer anderen Stelle, z.B. in einem anderen Stockwerk untergebracht als die Basisband-Einheit 3. Auch das Breitband-Filter 1 ist getrennt von den anderen Einheiten in eigenen Filtergestellen untergebracht. Daraus ergibt sich ein Verkabelungs- und Wartungsaufwand, den die Erfindung beseitigen möchte. Weiters ist eine Anpassung der verschiedenen Dienste und des Breitband-Filters oft sehr kompliziert, da die örtlich getrennten Einheiten geeignet aufeinander abgestimmt werden müssen.

Eine Ausführungsform der Erfindung ist in Fig.2 dargestellt, wobei für den Betrieb des Nachrichtenübertragungssystems erforderliche Gabelschaltungen 7, die im Blockschaltbild Fig.1 nicht eingezeichnet aber auch vorhanden sein müssen (siehe auch Fig.5, 6), zwischen der Basisband-Einheit 30 bzw. der Breitband-Einheit 20 und dem Filter 1 geschaltet sind.

Erfindungsgemäß sind gemäß Fig.2 die Basisband-Einheit 30, die Breitband-Einheit 20, die Gabelschaltungen 7 und das gemeinsame Breitband-Filter 1 zu einer Einheit mit einer zentralen Schnittstellen-Steuervorrichtung 50 zusammengefaßt. Damit werden alle diese Funktionseinheiten in unmittelbarer Nachbarschaft, vorzugsweise auf einer gemeinsamen Leiterplatte, aufgebaut. Dies ist durch die strichlierte Umrandung der Einheiten angedeutet. Es wird dadurch eine bedeutende Reduktion der Verkabelungs- und Wartungsarbeiten und des Dokumentationsaufwandes sowie die Möglichkeit der individuellen Anpassung an bestehende Leitungsnormen und Filtertypen ermöglicht.

Eine weitere Verbesserung des erfindungsgemäßen Systems läßt sich durch das Ausführungsbeispiel gemäß Fig.3 erzielen, da anstelle eines bidirektionalen Filters mehrere unidirektionale Filter vorgesehen sind, die wesentlich kostengünstiger ausgeführt werden können. Dazu sind der Sendeausgang 22, 24 und der Empfangseingang 23, 25 der Breitband-Einheit 20 bzw. der Basisband-Einheit 30 mit den teilnehmerseitigen Eingängen 42, 43 bzw.

Ausgängen 44, 45 jeweils eines unidirektionalen Breitband-Filters 1', 1''' bzw. 1", 1^{IV} verbunden.

Weiters sind der Eingang 51 und der Ausgang 52 der beiden unidirektionalen Breitband-Filter 1', 1''' bzw. 1'', 1^{IV} mit einer gemeinsamen Gabelschaltung 25 verbunden. Damit wird die Filterfunktion in die zwei Senderichtungen aufgeteilt und die Gabelschaltungsfunktion zu einem Funktionsblock zusammengelegt.

Als weiterer Schritt der Vereinfachung sind in Fig.3 die gemeinsame Gabelschaltung 25, die beiden unidirektionalen Breitband-Filter 1', 1''' bzw. 1", 1^{IV}, die Breitband-Einheit 20, die Basisband-Einheit 30 und die zentrale Schnittstellen-Steuervorrichtung 50 auf einer Leiterplatte 11 zusammengefaßt.

Ein weiterer Grad der Vereinheitlichung der zusammengefaßten Einheiten kann erreicht werden, wenn die in der Basisband-Einheit 30 und in der Breitband-Einheit 20 vorhandenen digitalen Signal-Prozessoren (DSP) zusammengezogen werden können, wodurch z.B. Filterung und Signalbildung von einem einzigen DSP vorgenommen werden kann. In ähnlicher Weise können auch Digital-Analog-Wandler und Analog-Digital-Wandler der Basisband-Einheit 30 und der Breitband-Einheit 20 in einem integrierten Schaltkreis mehrfach genutzt werden.

Um dies zu veranschaulichen, sind in Fig.5 und 6 jeweils ein CODEC 42 für eine Basisbandeinheit und ein CODEC 52 für eine Breitband-Einheit als Blockschaltbild dargestellt, wobei neben einer bidirektionalen Kodierungseinheit 45,55 und einem bidirektionalen Filter 44, 54 jeweils ein Analog/Digital- bzw. Digital-Analog-Wandler 43 bzw. 53 vorgesehen ist, deren Wandlerfunktionen im erfindungsgemäßen Nachrichtenübertragungssystem in einem zentralen Analog/Digital- bzw. Digital-Analog-Wandler vereint sein können. Ebenso können die für die Filterung in den Filtern 44 und 54 jeweils vorgesehenen Digital-Signal-Prozessoren in einem zentralen Digital-Signal-Prozessor zusammengefaßt sein.

Schließlich kann eine weitere Verbesserung der Betriebsbedingungen erreicht werden, indem die Basisband-Einheit 30, die Breitband-Einheit 20, die zentrale Schnittstellen-Steuervorrichtung 50 und gegebenenfalls Teile des Breitband-Filters 1 (Fig.2) oder der Breitband-Filter 1', 1''' bzw. 1", 1^{IV} (Fig.3) zumindest teilweise integriert bzw. als integrierter Schaltkreis ausgeführt sind. Der integrierte Schaltkreis kann dabei als ein Baustein oder als ein Chip-Set aus mehreren Bausteinen gebildet sein.

## Patentansprüche

1. Nachrichtenübertragungssystem zur gleichzeitigen Übertragung von analogen oder digitalen Basisbandsignalen, z.B. POTS, ISDN o.ä. und von Breitbandsignalen, z.B. ADSL, VDSL o.ä., über eine Zweidrahtleitung von einer zentralen Stelle, z.B. einem Wählamt, zu zumindest einem Teilnehmer, mit, in der zentralen Stelle, einer Basisband-Einheit und einer Breitband-Einheit, die über zumindest eine Gabelschaltung und zumindest ein Breitband-Filter, welches aus einem Hoch- und einem Tiefpaß gebildet ist, mit der Teilnehmerleitung verbunden sind, **dadurch gekennzeichnet, daß** die Basisband-Einheit (30), die Breitband-Einheit (20) und das zumindest eine Breitband-Filter (1;1', 1''' bzw. 1'', 1^{IV}) zu einer Einheit mit einer zentralen Schnittstellen-Steuervorrichtung (50) zusammengefaßt sind.

2. System nach Anspruch 1, **dadurch gekennzeichnet, daß** die Basisband-Einheit (30), die Breitband-Einheit (20) und das zumindest eine Breitband-Filter (1;1', 1''' bzw. 1'', 1^{IV}) auf einer gemeinsamen Leiterplatte zusammengefaßt sind.

3. System nach Anspruch 1 oder 2, **dadurch gekennzeichnet, daß** weiters die zumindest eine Gabelschaltung (7;25) in der Einheit mit der zentralen Schnittstellen-Steuervorrichtung (50) beinhaltet bzw. auf der gemeinsamen Leiterplatte angeordnet ist.

4. System nach Anspruch 1, 2 oder 3, **dadurch gekennzeichnet, daß** der Sendeausgang (22, 24) und der Empfangseingang (23, 25) der Breitband-Einheit (20) bzw. der Basisband-Einheit (30) mit den teilnehmerseitigen Eingängen (42, 43) bzw. Ausgängen (44, 45) jeweils eines unidirektionalen Breitband-Filters (1', 1''' bzw. 1", 1^{IV}) verbunden sind, und daß der Eingang (51) und der Ausgang (52) der beiden unidirektionalen Breitband-Filter (1', 1''' bzw. 1", 1^{IV}) mit einer gemeinsamen Gabelschaltung (25) verbunden sind.

5. System nach Anspruch 4, **dadurch gekennzeichnet, daß** die gemeinsame Gabelschaltung (25), die beiden unidirektionalen Breitband-Filter (1', 1''' bzw. 1", 1^{IV}), die Breitband-Einheit (20), die Basisband-Einheit (30) und die zentrale Schnittstellen-Steuervorrichtung (50) auf einer Leiterplatte (11) zusammengefaßt sind.

6. System nach einem der Ansprüche 1 bis 5, **dadurch gekennzeichnet, daß** die der Basisband-Einheit und der Breitband-Einheit zugeordneten digitalen Signal-Prozessor-Schaltkreise zu einem zentralen digitalen Signal-Prozessor-Schaltkreis zusammengefaßt sind.

7. System nach einem der Ansprüche 1 bis 6, **dadurch gekennzeichnet, daß** die der Basisband-Einheit und der Breitband-Einheit zugeordneten Analog-Digital-Wandler zu einem zentralen Analog-Digital-Wandler zusammengefaßt sind.

8. System nach einem der Ansprüche 1 bis 7, **dadurch gekennzeichnet, daß** die Basisband-Einheit (30), die Breitband-Einheit (20) und die zentrale Schnittstellen-Steuervorrichtung (50) zumindest teilweise integriert sind.

9. System nach Anspruch 8, **dadurch gekennzeichnet, daß** Teile des oder der Breitband-Filter(s) (1; 1', 1''' bzw. 1'', 1^{IV}) integriert sind.

10. System nach Anspruch 8 oder 9, **dadurch gekennzeichnet, daß** der integrierte Schaltkreis als ein Baustein oder als ein Chip-Set aus mehreren Bausteinen ausgebildet ist.

## Claims

1. A message transmission system for simultaneous transmission of analogue or digital baseband signals, e.g. POTS, ISDN or the like, and of broadband signals, e.g. ADSL, VDSL, or the like, via a two-wire line from a central point, e.g. an automatic exchange, to at least one subscriber, with a baseband unit and a broadband unit in the central point which are connected with the subscriber line via at least one hybrid circuit and at least one broadband filter which is formed by a high-pass and low-pass filter, **characterized in that** the baseband unit (30), the broadband unit (20) and the at least one broadband filter (1; 1', 1''' or 1", 1^{IV}) are joined into a unit with a central interface control apparatus (50).

2. A system according to claim 1, **characterized in that** the baseband unit (30), the broadband unit (20) and the at least one broadband filter (1; 1', 1''' or 1'', 1^{IV}) are combined on a common printed circuit board.

3. A system according to claim 1 or 2, **characterized in that** furthermore the at least one hybrid circuit (7; 25) is contained in the unit with the central interface control apparatus (50) or is arranged on the common printed circuit board.

4. A system according to claim 1, 2 or 3, **characterized in that** the transmitter output (22, 24) and the receiver input (23, 25) of the broadband unit (20) or the baseband unit (30) are connected with the subscriber-side inputs (42, 43) or outputs (44, 45) of a unidirectional broadband filter (1; 1', 1''' or 1'', 1^{IV}) each, and that the input (51) and the output (52) of the two unidirectional broadband filters (1; 1', 1'' or 1'', 1^{IV}) are connected with a common hybrid circuit (25).

5. A system according to claim 4, **characterized in that** the common hybrid circuit (25), the two unidirectional broadband filters (1; 1', 1''' or 1", 1^{IV}), the broadband unit (20), the baseband unit (30) and the central interface control apparatus (50) are combined on a printed circuit board (11).

6. A system according to one of the claims 1 to 5, **characterized in that** the digital signal processor circuits associated with the baseband unit and the broadband unit are combined into a central digital signal processor circuit.

7. A system according to one of the claims 1 to 6, **characterized in that** the analogue-to-digital converters associated with the baseband unit and the broadband unit are combined into a central analogue-to-digital converter.

8. A system according to one of the claims 1 to 7, **characterized in that** the baseband unit (30), the broadband unit (20) and the central interface control apparatus (50) are integrated at least partially.

9. A system according to claim 8, **characterized in that** parts of the broadband filter(s) (1; 1', 1''' or 1'', 1^{IV}) are integrated.

10. A system according to claim 8 or 9, **characterized in that** the integrated circuit is arranged as a module or as a chipset of several modules.

## Revendications

1. Système de transmission de messages pour la transmission simultanée de messages analogiques ou numériques en bande de base, par exemple POTS, ISDN et similaires, et de signaux à large bande, par exemple ADSL, VDSL ou similaires, sur une ligne à deux fils entre un poste central, par exemple un central téléphonique, et au moins un appareil connecté, avec dans le poste central une unité en bande de base et une unité en large bande qui sont connectées à la ligne de l'appareil connecté via au moins un termineur quatre fils et au moins un filtre à large bande formé par un filtre passe-haut et un passe-bas, **caractérisé en ce que** l'unité en bande de base (30), l'unité en large bande (20) et l'au moins un filtre à large bande (1 ; 1', 1''' ou 1'', 1^{IV}) sont réunis dans une unité avec un dispositif central de commande d'interface (50).

2. Système selon la revendication 1, **caractérisé en ce que** l'unité en bande de base (30), l'unité en large bande (20) et l'au moins un filtre à large bande (1 ; 1', 1''' ou 1", 1^{IV}) sont réunis sur une carte de circuits commune.

3. Système selon la revendication 1 ou 2, **caractérisé en outre en ce que** l'au moins un termineur quatre fils (7, 25) est contenu dans l'unité avec le dispositif central de commande d'interface (50) ou disposé sur la carte de circuits commune.

4. Système selon la revendication 1, 2 ou 3, **caractérisé en ce que** la sortie d'émission (22, 24) et l'entrée de réception (23, 25) de l'unité en large bande (20) et de l'unité en bande de base (30) sont connectées chacune aux entrées (42, 43) et sorties (44, 45) d'un filtre à large bande unidirectionnel (1', 1''' ou 1", 1^{IV}) du côté des appareils connectés et **en ce que** l'entrée (51) et la sortie (52) des deux filtres à large bande unidirectionnels (1', 1"' ou 1", 1^{IV}) sont reliées à un termineur quatre fils commun (25).

5. Système selon la revendication 4, **caractérisé en ce que** le termineur quatre fils commun (25), les deux filtres à large bande unidirectionnels (1', 1''' ou 1", 1^{IV}), l'unité en large bande (20), l'unité en bande de base (30) et le dispositif central de commande d'interface (50) sont réunis sur une carte de circuits (11).

6. Système selon l'une des revendications 1 à 5, **caractérisé en ce que** les circuits processeurs de signaux numériques associés à l'unité en bande de base et à l'unité en large bande sont réunis dans un circuit processeur de signaux numérique central.

7. Système selon l'une des revendications 1 à 6, **caractérisé en ce que** les convertisseurs analogique-numérique associés à l'unité en bande de base et à l'unité en large bande sont réunis en un convertisseur analogique-numérique central.

8. Système selon l'une des revendications 1 à 7, **caractérisé en ce que** l'unité en bande de base (30), l'unité en large bande (20) et le dispositif central de commande d'interface (50) sont au moins partiellement intégrés.

9. Système selon la revendication 8, **caractérisé en ce que** des parties du ou des filtres à large bande (1 ; 1', 1''' ou 1'', 1^{IV}) sont intégrées.

10. Système selon la revendication 8 ou 9, **caractérisé en ce que** le circuit intégré est conformé comme un composant ou comme un ensemble de puces composé de plusieurs composants.
